# EUROPÄISCHE PATENTSCHRIFT

(11) **EP 0 413 150 B1**
(45) Veröffentlichungstag und Bekanntmachung des Hinweises auf die Patenterteilung: **23.03.1994**
(21) Anmeldenummer: 90113627.5
(22) Anmeldetag: 17.07.1990
(51) Int. Cl.: B27B 9/02, G01D 5/02, B23Q 17/22, B28D 1/18, G01B 3/00

(54) **Frästiefenanzeige für eine Strassenfräse**
Milling depth display for a road milling machine
Affichage de profondeur de fraisage pour une machine de fraisage

(30) Priorität: 12.08.1989 DE 3926759
(43) Veröffentlichungstag der Anmeldung: 20.02.1991
(73) Patentinhaber: ABG-WERKE GmbH, D-31785 Hameln (DE)
(72) Erfinder: Hellwig, Helmut, D-4970 Bad Oeynhausen (DE); Lemke, Bernd, D-3413 Moringen 1 (DE)
(74) Vertreter: Sparing - Röhl - Henseler Patentanwälte

(56) Entgegenhaltungen:
- EP-A- 0 062 842
- DE-A- 2 153 544
- DE-A- 3 541 267
- FR-A- 2 554 921
- US-A- 2 831 514

## Beschreibung

Die Erfindung betrifft eine Frästiefenanzeige für eine Straßenfräse, die an ein an einem Teil der Straßenfräse, das den Hub der Frästiefenverstellung mitmacht, diesen Hub abgreifendes Zugkabel anschließbar ist und eine Anzeigeskala sowie ein Anzeigeelement umfaßt.

Bei Straßenfräsen sind Frästiefenanzeigen bekannt, die eine Stange aufweisen, die entlang einer Linearskala verschiebbar und mit einem Zug-Druck-Kabel verbunden ist, das an einem Stützrad oder einem anderen Teil der Straßenfräse, das den Hub der Fräsentiefenverstellung mitmacht, den über Elektromagnetventile und Hydraulikzylinder eingestellten Hub abgreift und damit eine Anzeige der Frästiefe ermöglicht. Ein derartiges Gerät baut sehr lang und läßt sich nicht gut in das Instrumentenbrett einer Maschine integrieren.

Aufgabe der Erfindung ist es daher, eine Frästiefenanzeige der eingangs genannten Art zu schaffen, die nur eine geringe Bauhöhe benötigt und daher ohne weiteres in ein Instrumentenbrett integrierbar ist.

Diese Aufgabe wird dadurch gelöst, daß ein Gehäuse mit einer darin gelagerten Welle vorgesehen ist, die eine die Anzeigeskala tragende Anzeigescheibe und eine Seilscheibe für das Zugkabel trägt, wobei die Welle gegenüber dem Gehäuse entgegen der Drehrichtung des Zuges des Zugkabels federvorgespannt und das Anzeigeelement als Nullmarke gehäusefest angeordnet ist..

Hierbei wird somit eine sich gegenüber einer Nullmarke drehende Anzeigeskala verwendet, die mit einer Welle verbunden ist, die eine Seilscheibe trägt, an der das zum Stützrad oder einem anderen Teil führende Zugkabel angreift. Das Zugkabel wird hierbei durch eine Federvorspannung straff gehalten.

Außerdem ist es hierbei ohne Schwierigkeiten möglich, eine elektrische Frästiefenabschaltung einzubauen, mit deren Hilfe eine vorher eingestellte Frästiefe - beispielsweise zu Beginn des Fräsens oder nach dem Überfahren eines Kanaldeckels o.dgl. - gefunden bzw. wiedergefunden werden kann.

Weitere Ausgestaltungen der Erfindung sind der nachfolgenden Beschreibung und den Unteransprüchen zu entnehmen.

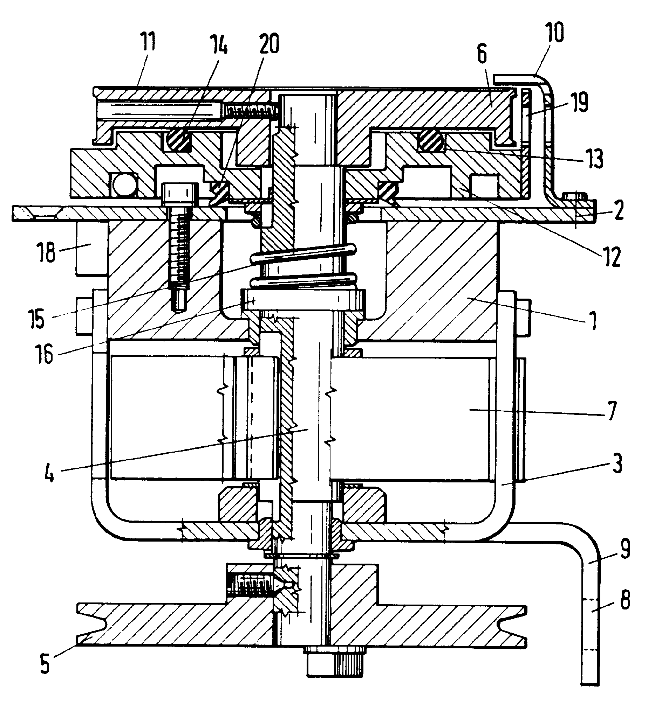

Die Erfindung wird nachstehend anhand eines in der beigefügten Abbildung im Schnitt dargestellten Ausführungsbeispiels näher erläutert.

Die dargestellte Frästiefenanzeige umfaßt einen Gehäuseblock 1, der mit einem Montageflansch 2 einerseits und mit einem Bügel 3 andererseits verschraubt ist. In dem Gehäuseblock 1 und dem Bügel 3 ist eine Welle 4 gelagert, die an einem Ende eine Seilscheibe 5 und am anderen Ende eine Anzeigescheibe 6 trägt. Die Seilscheibe 5 ist mit einem nicht dargestellten, zu einem Stützrad (oder einem anderen dem Hub der Frästiefenverstellung unterliegenden Teil) einer Fräseinheit führendem und dessen Hub abgreifendem Zugkabel verbunden, das über eine Drehfeder 7, die an der Welle 4 angreift und an dem Bügel 3 befestigt ist, gespannt gehalten wird. Das Zugkabel wird durch eine Führungsöse 8 in einem am Bügel 3 befestigten Winkelstück 9 zum Stützrad geführt.

Mit dem Montageflansch 2 ist eine Nullmarke 10 für die auf der Anzeigescheibe 6 befindliche Anzeigeskala 11 verbunden. Die Nullmarke 10 hat beispielsweise eine zeigerförmige Spitze.

Unterhalb der Anzeigescheibe 6 befindet sich eine Einstellscheibe 12, die gegenüber der Welle 4 drehbar gelagert ist und an ihrer Oberseite eine umlaufende Nut 13 aufweist, die einen O-Ring 14 aufnimmt, der durch eine Druckfeder 15, die sich an einem Bund 16 der Welle 4 abstützt und auf die Einstellscheibe 12 einwirkt, um diese in Richtung auf die Anzeigescheibe 6 zu drücken, axial in Eingriff mit der Unterseite der Anzeigescheibe 6 gehalten wird. Außerdem ist unterseitig zur Einstellscheibe 12 ein Permanentmagnet an dieser befestigt, beispielsweise eingeklebt, während der Gehäuseblock 1 benachbart zum Montageflansch 2 einen Reedschalter 18 trägt, der durch den Permanentmagneten betätigbar ist. Die Einstellscheibe 12 trägt seitlich eine Einstellmarke 19 zum Einstellen der Einstellscheibe 12 relativ zur Anzeigescheibe 6 auf einen vorgesehenen Wert auf der Anzeigeskala 11.

Eine Dichtung 20 zwischen der Einstellscheibe 12 und dem Montageflansch 2 verhindert ebenso wie der O-Ring 14 das Eindringen von Schmutz in das Innere.

Das Zugkabel dreht über die Welle 4 die Anzeigescheibe 6 entsprechend der an dem Stützrad der Fräseinheit abgegriffenen Frästiefe. Hierbei wird die Einstellscheibe 12 aufgrund ihres Reibschlusses mit der Anzeigescheibe 6 über den O-Ring 14 mitgedreht.

Andererseits läßt sich die Einstellscheibe 12 leicht manuell gegenüber der Anzeigescheibe 6 zur Einstellung einer Solltiefe über die Einstellmarke 19 im Verhältnis zur Anzeigeskala 11 drehen. Hierdurch wird der Permanentmagnet mitgedreht. Erreicht die Ist-Tiefe die eingestellte Soll-Tiefe, in welchem Fall sich der Permanentmagnet über dem Reedschalter 18 befindet, erfolgt hierdurch eine Stromunterbrechung für elektromagnetische Ventile der Fräseinheit, die zur Einstellung der Frästiefe betätigbar sind. Die so bewirkte elektrische Frästiefenabschaltung ermöglicht daher ein Wiederauffinden einer vorher eingestellten Frästiefe beispielsweise nach Überfahren eines Kanaldekkels o.dgl.

## Patentansprüche

1. Frästiefenanzeige für eine Straßenfräse, die an ein an einem Teil der Straßenfräse, das den Hub der Frästiefenverstellung mitmacht, diesen Hub abgreifendes Zugkabel anschließbar ist und eine Anzeigeskala (11) sowie ein Anzeigeelement (10) umfaßt, dadurch **gekennzeichnet,** daß ein Gehäuse (1) mit einer darin gelagerten Welle (4) vorgesehen ist, die eine die Anzeigeskala (11) tragende Anzeigescheibe (6) und eine Seilscheibe (5) für das Zugkabel trägt, wobei die Welle (4) gegenüber dem Gehäuse (1) entgegen der Drehrichtung des Zuges des Zugkabels federvorgespannt und das Anzeigeelement (10) als Nullmarke gehäusefest angeordnet ist.

2. Frästiefenanzeige nach Anspruch 1, dadurch gekennzeichnet, daß das Gehäuse einen eine erste Lagerstelle für die Welle (4) bildenden Gehäuseblock (1) und einen daran befestigten Bügel (3), der eine Lagerstelle für die Welle (4) bildet und an dem die die Welle (4) vorspannende Feder (7) befestigt ist, umfaßt.

3. Frästiefenanzeige nach Anspruch 1 oder 2, dadurch gekennzeichnet, daß eine mit der Anzeigescheibe (6) unter Reibschluß in Eingriff stehende, um die Welle (4) drehbar angeordnete Einstellscheibe (12) vorgesehen ist, die einen Permanentmagneten trägt, während gehäusefest ein hiervon betätigbarer Reedschalter (18) vorgesehen ist, über den Elektromagnetventile zur Hubeinstellung der Straßenfräse abschaltbar sind.

4. Frästiefenanzeige nach Anspruch 3, dadurch gekennzeichnet, daß die Einstellscheibe (12) einen mit der Anzeigescheibe (6) unter Federvorspannung in Eingriff gehaltenen O-Ring (14) aufnimmt.

5. Frästiefenanzeige nach Anspruch 3 oder 4, dadurch gekennzeichnet, daß der Permanentmagnet in einer Ausnehmung an der dem Gehäuse (1) zugewandten Seite der Einstellscheibe (12) befestigt, insbesondere eingeklebt ist.

6. Frästiefenanzeige nach einem der Ansprüche 3 bis 5, dadurch gekennzeichnet, daß die Einstellscheibe (12) eine Einstellmarke (19) trägt.

## Claims

1. Milling depth display for a road milling machine which is connectable to a tension cable which, on a part of the road milling machine participating in the stroke of the milling depth displacement, detects this stroke, and which display comprises an indicator scale (11) and an indicator member (10), characterised in that a housing (1) is provided with a shaft (4) mounted therein which carries an indicator disc (6), bearing the indicator scale (11), and a cable pulley (5) for the tension cable, the shaft (4) being spring-biased with respect to the housing (1) against the direction of rotation of the pull of the tension cable, and the indicator member (10) being fixedly arranged on the housing as a zero marker.

2. Milling depth display according to Claim 1, characterised in that the housing comprises a housing block (1) forming a first bearing point for the shaft (4), and, attached to the housing block, a stirrup (3) which forms a bearing point for the shaft (4) and to which the spring (7) biasing the shaft (4) is fastened.

3. Milling depth display according to Claim 1 or 2, characterised in that a dial (12) arranged so as to be rotatable about the shaft (4) and engaging by friction with the indicator disc (6) is provided which carries a permanent magnet, while there is fixedly arranged on the housing a reed switch (18) which is actuated by the permanent.magnet and by way of which electromagnetic valves for the adjustment of the stroke of the road milling machine can be switched off.

4. Milling depth display according to Claim 3, characterised in that the dial (12) accommodates an O-ring (14) which is held under spring bias in engagement with the indicator disc (6).

5. Milling depth display according to Claim 3 or 4, characterised in that the permanent magnet is fastened, especially adhesively secured, in a recess on the side of the dial (12) facing towards the housing (1).

6. Milling depth display according to one of Claims 3 to 5, characterised in that the dial (12) carries a locating mark (19).

## Revendications

1. Indicateur de profondeur de fraisage d'une fraise routière, pouvant être raccordé à un câble de traction qui, lui-même raccordé à une partie de la fraise participant au déplacement de celle-ci, mesure la variation de la course en profondeur de la fraise, ledit indicateur comprenant une échelle indicatrice (11) ainsi qu'un élément de repérage (10), caractérisé en ce qu'il comporte un corps de boîtier (1) à l'intérieur duquel est monté un arbre (4) portant un disque indicateur (6) muni d'une échelle indicatrice (11) et une poulie (5) pour le câble de traction, ledit arbre (4) étant, par rapport au boîtier (1), sollicité par un ressort à l'encontre d'une traction exercée par le câble et l'élément de repérage (10) étant intégré au carter sous la forme d'un repère de zéro.

2. Indicateur de profondeur de fraisage selon la revendication 1, caractérisé en ce que le boîtier comprend un corps (1) formant un premier point d'appui pour l'arbre (4) et, fixé sur ce corps, un étrier (3) qui constitue un point d'appui pour l'arbre (4) et sur lequel est fixé le ressort (7) maintenant ledit arbre (4) sous une tension initiale.

3. Indicateur de profondeur de fraisage selon la revendication 1 ou 2, caractérisé par un disque de réglage (12) disposé de manière rotative autour de l'arbre (4) et en contact frottant avec le disque indicateur (6), le disque de réglage (12) portant un aimant permanent pouvant actionner un interrupteur à lame souple (18) fixé au boîtier et pouvant mettre hors circuit des vannes électromagnétiques destinées au réglage de la course en profondeur de la fraise.

4. Indicateur de profondeur de fraisage selon la revendication 3, caractérisé en ce que ledit disque de réglage (12) reçoit un joint torique (14) maintenu en contact avec le disque indicateur (6) sous la pression d'un ressort.

5. Indicateur de profondeur de fraisage selon la revendication 3 ou 4, caractérisé en ce que l'aimant permanent est fixé, et de préférence collé, dans un évidement sur la face du disque de réglage (12) tournée vers le boîtier (1).

6. Indicateur de profondeur de fraisage selon l'une des revendications 3 à 5, caractérisé en ce que le disque de réglage (12) porte un repère de réglage (19).
